# EUROPEAN PATENT APPLICATION

(11) **EP 4 047 732 A1**
(43) Date of publication of application: **24.08.2022**
(21) Application number: 21192271.1
(22) Date of filing: 20.08.2021
(51) Int. Cl.: H01M 50/244, H01M 50/256, H01M 50/258, H01M 50/264, H01M 50/204, H01M 50/269

(54) **ENERGY STORAGE POWER SUPPLY CAPABLE OF STACKING BATTERY PACKS**

(30) Priority: 23.02.2021 CN 202120397085 U
(71) Applicant: SHENZHEN DBK ELECTRONICS CO., LTD., Guangdong (CN)
(72) Inventor: Zeng, Jinhui, Shenzhen (CN)
(74) Representative: Sun, Yiming

(57) **Abstract**

The invention is directed to an energy storage power supply capable of stacking battery packs, comprising an energy storage power supply host and a battery pack, wherein the bottoms of the front and back sides of the energy storage power supply host are fixedly connected with corresponding rotating shafts, the top of the rotating shaft is movably connected with a bonding plate, the bottom of the rotating shaft is movably connected with a connecting plate, the front and back sides of the battery pack are fixedly connected with connecting rods, the upper end of the connecting rod far away from the battery pack is movably equipped with an auxiliary arm through a bearing, the lower end of the connecting rod far away from the battery pack is movably equipped with a connecting arm through a bearing, the auxiliary arm and the connecting arm are connected with each other, so that the number of battery packs can be adjusted according to needs when going out for work. In the transportation process, each battery pack can be disassembled through the connecting arm and the auxiliary arm, and the host of the energy storage power supply can also be disassembled separately, which is simple and convenient for transportation, and is very convenient to assemble again before use.

## Description

### TECHNICAL FIELD

The utility model belongs to the technical field of power supply, in particular to an energy storage power supply capable of stacking battery packs.

### BACKGROUND ART

A power supply is a device that converts other forms of energy into electrical energy. Based on the principle of "magnetism generates electricity", electric power is generated by renewable energy sources such as hydraulic power, wind power, tide, dam water pressure difference and solar energy as well as burning coal and oil residue. Common power supplies are dry batteries (DC) and household 110V-220V AC power supplies. Power supply products are widely used in industrial automation control, military equipment, scientific research equipment, industrial control equipment, computers and PC, communication equipment, power equipment, instruments and meters, medical equipment, semiconductor refrigeration and heating and other fields. With the development of the times, it is often necessary to equip energy storage power supply in order to prevent accidents.

However, the existing energy storage power supply has limited power supply in use, so it is necessary to carry many battery packs in case of need. However, when there are too many battery packs, the number of battery packs cannot be flexibly configured according to the field requirements, which will lead to the situation of carrying too much weight and too large volume or carrying too little energy. Therefore, it is necessary to improve the structure ofenergy storage power supply, and propose an energy storage power supply capable of stacking battery packs, so as to better solve the above problems.

### CONTENTS OF THE UTILITY MODEL

The utility model aims at providing an energy storage power supply capable of stacking battery packs in order to solve the above problems.

The technical solutions adopted by the utility model are as follows:
An energy storage power supply capable of stacking battery packs, comprising an energy storage power supply host and a battery pack, wherein the bottom of the energy storage power supply host is connected with the top of the battery pack, a handle is fixedly connected to the top center line position of the energy storage power supply host, the bottoms of the front and back sides of the energy storage power supply host are fixedly connected with corresponding rotating shaft, the top of the rotating shaft is movably connected with a bonding plate, the shape of the bonding plate is L-shaped, the bonding plate is tightly attached to the outer surface of the energy storage power supply host, the top is attached to the top of the energy storage power supply host, the bottom of the rotating shaft is movably connected with a connecting plate, the connecting plate is attached to the outer wall of the battery pack, the bonding plate and the connecting plate are provided with corresponding fixing holes, the fixing hole is threaded with a fixing bolt, the front and back sides of the battery pack are fixedly connected with corresponding connecting rods, the upper end of the connecting rod far away from the battery pack is movably equipped with an auxiliary arm through a bearing, the lower end of the connecting rod far away from the battery pack is movably equipped with a connecting arm through a bearing, and the auxiliary arm and the connecting arm are connected with each other.

In a preferred embodiment, the bonding plate is located on both sides of the handle, the energy storage power supply host is fixed with a DC input/output port on the left side of the bonding plate on the front side, and an AC output port is installed on the right side of the bonding plate on the front side.

In a preferred embodiment, the connecting arm is fixedly connected with a fixing rod at the middle position of the connecting place relative to the auxiliary arm, the position of the auxiliary arm relative to the fixing rod is provided with a fixing groove, and the fixing groove is L-shaped.

In a preferred embodiment, the bottom of the fixing rod is connected with a fixing hook in a sliding mode, the fixing hook is adapted to the fixing groove, and the right wall of the auxiliary arm is movably penetrated with a threaded rod.

In a preferred embodiment, the upper part of the threaded rod is fixedly connected with an anti-dropping block, one end of the threaded rod extending to the inside of the auxiliary arm is arranged opposite to the fixing hook, and the right end of the threaded rod is fixedly connected with a rotating handle.

In a preferred embodiment, a connecting arm is fixedly connected below the connection of the battery pack and the energy storage power source host, and the top of the battery pack is fixedly connected with the connecting plate through a fixing bolt.

To sum up, through the above technical solutions, the utility model has the beneficial effects as follows:
1. In the utility model, the number of battery packs can be adjusted according to needs when going out for work. In the transportation process, each battery pack can be disassembled through the connecting arm and the auxiliary arm, and the host of the energy storage power supply can also be disassembled separately, which is simple and convenient for transportation, and is very convenient to assemble again before use.
2. In the utility model, multiple battery packs can be stacked and used, which greatly improves the power supply volume of the energy storage power supply and avoids shortage of power supply. Because the battery pack is assembled and carried separately, it is convenient to charge the battery pack and replace the battery pack at the same time, thus improving the power supply efficiency. The utility model can be disassembled or assembled at any time in use because of its detachability, which is particularly convenient in outdoor operation.

### DESCRIPTION OF DRAWINGS

Fig. 1 is a structural schematic diagram of the utility model;
Fig. 2 is a top view of the energy storage power supply host in the utility model;
Fig. 3 is a partial side view of the battery pack in the utility model;
Fig. 4 is an enlarged view of the structure at position A of the utility model.

Mark in the figure: 1-energy storage power supply host, 2-handle, 3-rotating shaft, 4-bonding plate, 5-battery pack, 6-connecting plate, 7-fixing bolt, 8-connecting rod, 9-auxiliary arm, 10-connecting arm, 11-fixing rod, 12-fixing hook, 13-threaded rod, and 14-anti-dropping block.

### SPECIFIC EMBODIMENTS

In order to make the purpose, technical solutions and advantages of the utility model clearer, the utility model is further described in detail in combination with the drawings and embodiments. It should be understood that the specific embodiments described herein are intended to explain the utility model only and are not intended to limit the utility model.

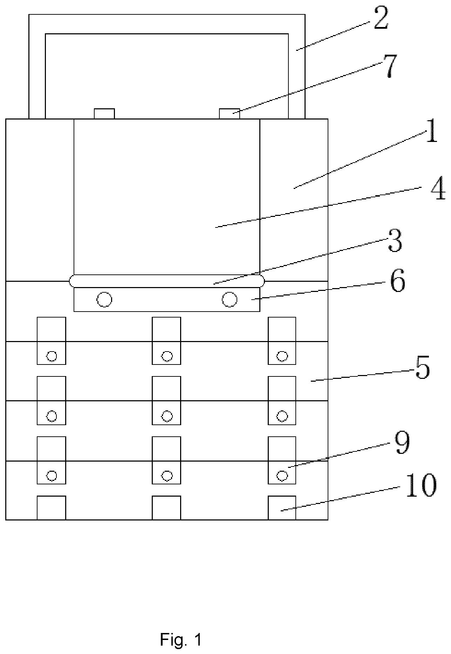

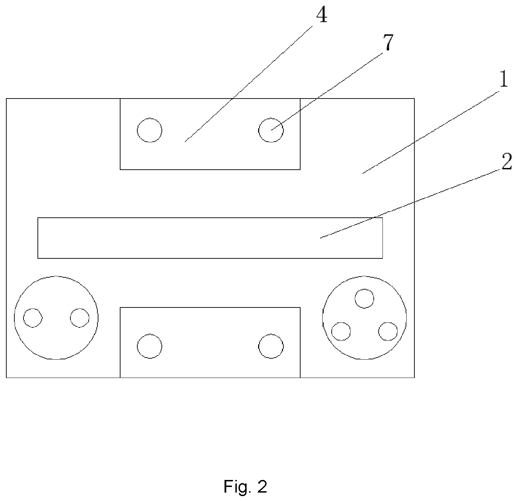

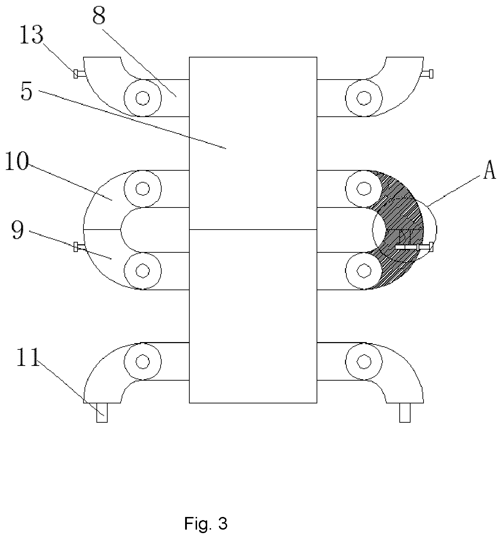

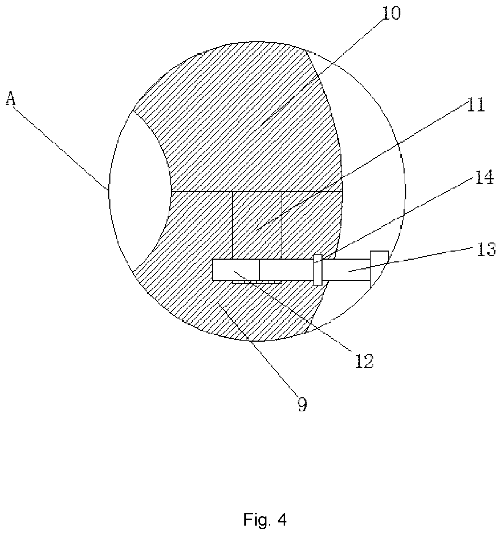

Referring to Fig. 1-4, an energy storage power supply capable of stacking battery packs, comprising an energy storage power source host 1 and a battery pack 5, wherein the bottom of the energy storage power supply host 1 is connected with the top of the battery pack 5, the top center line position of the energy storage power supply host 1 is fixedly connected with a handle 2, which is convenient for manual movement during outdoor operation, the bottoms of the front and back sides of the energy storage power supply host 1 are fixedly connected with corresponding rotating shaft 3, the top of the rotating shaft 3 is movably connected with a bonding plate 4, the shape of the bonding plate 4 is L-shaped, which is convenient to be attached to the outer wall of the energy storage power supply host 1, thereby making the battery pack 5 more stable after being connected, the bonding plate 4 is tightly attached to the outer surface of the energy storage power supply host 1, the top is attached to the top of the energy storage power supply host 1, the bonding plate 4 is located on both sides of the handle 2, a DC input/output port is fixedly installed on the left side of the bonding plate 4 on the front side of the energy storage power supply host 1, an AC output port is fixedly installed on the right side of the bonding plate 4 located on the front side, multiple ports are suitable for different occasions, so that the application area of the device is greatly improved, a connecting plate 6 is movably connected to the bottom of the rotating shaft 3, the connecting plate 6 is attached to the outer wall of the battery pack 5, corresponding fixing holes are provided on the bonding plate 4 and the connecting plate 6, the fixing hole is threaded with a fixing bolt 7, the front and back sides of the battery pack 5 are fixedly connected with corresponding connecting rods 8, an auxiliary arm 9 is movably mounted through a bearing at one end of the upper connecting rod 8 far away from the battery pack 5, a connecting arm 10 is movably mounted through a bearing at one end of the lower connecting rod 8 far away from the battery pack 5, the auxiliary arm 9 and the connecting arm 10 are connected to each other, a connecting arm 10 is fixedly connected below the connection between the battery pack 5 and the energy storage power supply host 1, the top of the battery pack 5 is fixedly connected with the connecting plate 6 through the fixing bolt 7, the connecting arm 10 is fixedly connected with a fixing rod 11 at a middle position where the connecting arm is connected with the auxiliary arm 9, the position of the auxiliary arm 9 relative to the fixing rod 11 is provided with a fixing groove, the fixing groove is L-shaped, the bottom of the fixing rod 11 is connected with a fixing hook 12 in a sliding mode, the fixing hook 12 is adapted to the fixing groove, so that the fixing hook 12 is convenient to enter and play a fixing role, the right wall of the auxiliary arm 9 is movably penetrated with a threaded rod 13, the upper part of the threaded rod 13 is fixedly connected with an anti-dropping block 14 to prevent the threaded rod 13 from slipping and ensure safety, one end of the threaded rod 13 extending to the inside of the auxiliary arm 9 is arranged opposite to the fixing hook 12, and the right end of the threaded rod 13 is fixedly connected with a rotating handle, which is convenient for manually assembling the battery pack 5.

Operating principle: In this application, in use, only all the battery packs 5 are stacked together, the auxiliary arm 9 is then connected to the connecting arm 10, the fixing rod 11 enters the fixing groove, and then the rotating handle is rotated, so that the threaded rod 13 pushes the fixing hook 12 into the fixing groove to further enhance the stability. Subsequently, the energy storage power supply host 1 is stacked on the uppermost part of the battery pack 5 and fixed by the fixing bolt 7. At this time, it can be used through the DC input/output port and the AC output port.

The above is only a preferred embodiment of the utility model, and is not intended to limit the utility model. Any modification, equivalent substitution and improvement made within the spirit and principle of the utility model should be included in the protection scope of the utility model.

## Claims

1. An energy storage power supply capable of stacking battery packs, comprising an energy storage power supply host (1) and a battery pack (5), wherein the bottom of the energy storage power supply host (1) is connected with the top of the battery pack (5), a handle (2) is fixedly connected to the top center line position of the energy storage power supply host (1), the bottoms of the front and back sides of the energy storage power supply host (1) are fixedly connected with corresponding rotating shaft (3), the top of the rotating shaft (3) is movably connected with a bonding plate (4), the shape of the bonding plate (4) is L-shaped, the bonding plate (4) is tightly attached to the outer surface of the energy storage power supply host (1), the top is attached to the top of the energy storage power supply host (1), the bottom of the rotating shaft (3) is movably connected with a connecting plate (6), the connecting plate (6) is attached to the outer wall of the battery pack (5), the bonding plate (4) and the connecting plate (6) are provided with corresponding fixing holes, the fixing hole is threaded with a fixing bolt (7), the front and back sides of the battery pack (5) are fixedly connected with corresponding connecting rods (8), the upper end of the connecting rod (8) far away from the battery pack (5) is movably equipped with an auxiliary arm (9) through a bearing, the lower end of the connecting rod (8) far away from the battery pack (5) is movably equipped with a connecting arm (10) through a bearing, and the auxiliary arm (9) and the connecting arm (10) are connected with each other.

2. The energy storage power supply capable of stacking battery packs according to claim 1, wherein the bonding plate (4) is located on both sides of the handle (2), the energy storage power supply host (1) is fixed with a DC input/output port on the left side of the bonding plate (4) on the front side, and an AC output port is installed on the right side of the bonding plate (4) on the front side.

3. The energy storage power supply capable of stacking battery packs according to claim 1, wherein the connecting arm (10) is fixedly connected with a fixing rod (11) at the middle position of the connecting place relative to the auxiliary arm (9), the position of the auxiliary arm (9) relative to the fixing rod (11) is provided with a fixing groove, and the fixing groove is L-shaped.

4. The energy storage power supply capable of stacking battery packs according to claim 3, wherein the bottom of the fixing rod (11) is connected with a fixing hook (12) in a sliding mode, the fixing hook (12) is adapted to the fixing groove, and the right wall of the auxiliary arm (9) is movably penetrated with a threaded rod (13).

5. The energy storage power supply capable of stacking battery packs according to claim 4, wherein the upper part of the threaded rod (13) is fixedly connected with an anti-dropping block (14), one end of the threaded rod (13) extending to the inside of the auxiliary arm (9) is arranged opposite to the fixing hook (12), and the right end of the threaded rod (13) is fixedly connected with a rotating handle.

6. The energy storage power supply capable of stacking battery packs according to claim 1, wherein a connecting arm (10) is fixedly connected below the connection of the battery pack (5) and the energy storage power supply host (1), and the top of the battery pack (5) is fixedly connected with the connecting plate (6) through a fixing bolt (7).
